# EUROPEAN PATENT APPLICATION

(11) **EP 2 230 520 A1**
(43) Date of publication of application: **22.09.2010**
(21) Application number: 09155525.0
(22) Date of filing: 18.03.2009
(51) Int. Cl.: G01N 35/00, B01L 3/00, G01N 33/487

(54) **Cartridge for accommodating a sample including a sample information element**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

The invention relates to a system for processing a biological or chemical sample. Further, the invention refers to an instrument for processing a sample. In addition, the invention relates to a cartridge for accommodating a sample to be handled by an instrument and to a sample taker for providing a sample to a cartridge. Moreover, the invention relates to a method for handling a cartridge including a sample or a component to be processed by an instrument. To provide a cartridge to be used in a handling apparatus preventing a wrong component from being inserted in the wrong cartridge it is proposed to provide a system for processing a biological or chemical sample, comprising: a cartridge (10) for accommodating a sample, the cartridge (10) comprising a cartridge information element (11, 12, 13); an instrument (50) for receiving and processing the cartridge (10) including the sample, a sample taker (20) for taking the sample to be entered into the cartridge (10), the sample taker (20) comprises a sample information element (20, 21, 22, 23, 24), wherein information carried on the cartridge information element (11, 12, 13) and information carried on the sample information element (20, 21, 22, 23, 24) are combined enabling the instrument (50) to process the sample. By this, the handling of the operator is simplified when using components and cartridges in a random order.

## Description

### FIELD OF INVENTION

The invention relates to a system for processing a biological or chemical sample. Further, the invention refers to an instrument for processing a sample. In addition, the invention corresponds to a cartridge for accommodating a sample to be handled by an instrument and to a sample taker for providing a sample to a cartridge. Moreover, the invention relates to a method for handling a cartridge including a sample or a component to be processed by an instrument.

### BACKGROUND OF THE INVENTION

For performing several types of diagnostic or analysis tests, like in vitro tests, instruments are used which perform an automated process for handling a component or a sample included in a cartridge. The cartridge may comprise only one sample, which needs to be analyzed. However, it is also possible that the cartridge includes a sample together with a plurality of consumables or reagents required for the test.

Systems comprising instruments, which are able to perform a plurality of different tests, are often called random access systems. For this purpose, an instrument can be equipped with different kind of cartridges, wherein cartridges of the same kind may include different samples, which need to be processed differently. Further, two cartridges of the same type possibly include the same components. But both cartridges should be processed differently to perform different tests. Further, a sample or component included in the cartridge may require a different treatment in terms of sequence, time etc. depending on the type of the sample or component. Thus, it is not known to the instrument, which kind of test needs to be performed with a certain cartridge after inserting the cartridge into the instrument.

A test may require a mixing of components, samples, reagents or consumables. Often such components, samples, reagents or consumables are very similar in form and function. A cartridge may further contain a number of components or consumables, not all of which are needed to perform a particular test. For instance different sample takers or handling tools may be present in a cartridge to support executing a test on different types of sample or components, wherein only one sample taker will be used in a certain test. All of this leaves room for human mistakes by using the wrong type of cartridge with a certain sample or a wrong component or reagent in a cartridge. This will lead to incorrect test results, if not intersected by the handling apparatus. Moreover, it will result in a loss of time and in a loss of sample material, if it is detected. In case of non-detection of a failure, the results may be even worse.

Conventionally, it is known to label the sample in the cartridge with a name and a barcode, which allows an operator and the handling apparatus to correctly identify the type of sample or consumable included in the cartridge. However, the name of the sample or consumable and also the name of the test are not very obvious and require care by the operator to avoid mistakes. Furthermore, the barcode is not recognizable for the user without technical means. The same applies for the label indicating the name or test, which is readable for the user, but not recognizable for the handling apparatus.

In addition, correct results can only be guaranteed if proper cartridges are used for a certain test. "Proper" means not only the correct type, but also originating from known and trusted sources and realized only for use with the certain instrument and not having passed its date of expiry.

WO 2007/060523 describes methods for controlling a fluid handling instrument, wherein a removable insert, which may comprise biological or chemical samples, is provided to the instrument for processing the insert and/or its contents. The insert comprises instruction data required for the processing by the instrument.

US 2005/0019213 describes methods and systems for washing, flushing or priming microscale devices for reuse. The microscale devices may comprise data storage modules for receiving, storing or/and supplying information about the history of the device, such as the number of wash cycles or the number of uses.

### SUMMARY

It is therefore an object of the present invention to provide a cartridge to be used in a handling apparatus preventing a wrong component from being inserted in the wrong cartridge. Moreover, it is an object to facilitate the handling of the operator when using components and cartridges in a random order. Further, it is an object to provide information to the handling apparatus in a reliable way.

The objects are solved by the features of the independent claims.

The invention is based on a thought to provide information required for processing a cartridge and/or a sample included in the cartridge on a very reliable way. Therefore it is proposed to have one kind of information providing information related at least to the cartridge. This information related to the cartridge is provided on or in the cartridge. This kind of information is designated as cartridge information and is provided with the cartridge information element included in or attached at the cartridge. Further, there is another set of information related to the sample. This kind of information is designated as sample information. The sample information is provided with the sample information element, which is included in or attached at least a part of a sample taker, which is used for taking the sample to be processed. Having both sets of information, the receiving and processing instrument is able to determine based on the information of the cartridge information element from the cartridge inserted in the instrument and based on the information of the sample information element, which sample is included in the cartridge or in the instrument or which test has to be performed. By combining both kinds of information, the instrument is able to process the cartridge and the sample correctly. By this, mistakes are reduced or prevented by having the possibility to check based on the combined information, whether it is an allowed combination of cartridge and sample. This possibility is given to the instrument and to the operator of the system. It is guaranteed by the invention to always have the most current information available for processing the sample and/or the cartridge. The instrument is able to determine in a first step, whether it is possible to process the sample with this certain type of cartridge. In case that both information elements do not fit together, it may be decided by the instrument to stop the processing. Thus, it is possible for the instrument to recognize, whether the correct sample is inserted in the instrument together with a suited cartridge. In a second step, after determining that the combination is allowed, the instrument may determine the steps or parameters for processing the sample and/or the cartridge based on the combined information.

In particular, it is proposed that a sample taker, which is used for taking the sample to be entered to the cartridge, comprises the sample information element. Thus, in the simplest solution, the sample taker is transferred together with the cartridge to the instrument and just the kind, the color or the form of the sample taker used for taking the sample provides the sample information. Thus, it is very easy for the instrument to recognize the sample taker based on its form or based on the sample information element. In this very simple solution, the sample taker is the sample information element itself. However, the sample taker may additionally comprise a further sample information element. Based on the sample information element, the instrument can easily determine the information related to the sample.

Moreover, the instrument is able to recognize the kind of cartridge based on the cartridge information element. By this, it is possible, for instance, to be recognized by the instrument, that a cartridge suited for carrying blood samples is combined with a sample taker, which is normally used for taking saliva samples. In case of recognizing such mismatch, the instrument can stop the processing. Thus, waste of time and samples is avoided.

In a preferred embodiment, the sample taker used for taking the sample is not inserted and kept with a cartridge or the instrument. Instead of attaching, inserting or combining the sample taker with a cartridge and/or the instrument, only a part of the sample taker is used to provide the required sample information element containing the sample information, which is then used by the instrument together with a cartridge.

In a preferred embodiment, the cartridge information element is attached or included in or at the cartridge and identifies at least a test type, which could be performed with the cartridge. However, it may further comprise information of the history, the manufacturer or the owner of the cartridge, etc.

The sample information element, which may be realized by the sample taker or at least a part of the sample taker, identifies at least a sample type or any other information related to the sample, like source, destination, date of the sample, duration of the sample, etc.

In a further preferred embodiment it is proposed to combine the sample information of the sample information element and the information of the cartridge information element directly on the cartridge. Thus, the operator may take the sample from the patient or test object and may insert the sample taker or a part of it in the cartridge or attach at least the part of the sample taker on the cartridge to thereby provide the information of the sample information element to the cartridge. By this, it is possible for the instrument to recognize the information from the cartridge information element and the information from the sample information element during or before processing.

In case of electronically storing the cartridge information on a respective storing device of the cartridge, it is possible that during inserting the sample into the cartridge the sample taker provides wirelessly or via contacts the sample information of its sample information element to the storing device of the cartridge to thereby store the information of the sample information element in or at the cartridge, preferably in the electronic cartridge information element.

In an alternative embodiment, it is possible to provide the cartridge including the cartridge information element to the instrument and to separately provide at least a part of the sample taker including the sample information element to the instrument so that both kinds of information are provided to the instrument enabling the instrument to process the cartridge or the sample correctly. Thus, in case of a cartridge having limited dimensions, this embodiment provides the advantage to have the possibility to use the sample information of the sample information element without having the part of the sample taker attached or inserted in the cartridge. Thus, the instrument is able to read the information from the cartridge information element and to read the information from the separately inserted sample information element to process the sample and/or the cartridge correctly.

Moreover, it is possible to have a cartridge information element and/or a sample information element, which are both machine-readable. This could be realized in form of a barcode or in form of electronically readable elements, like RF-IDs, non-volatile memories etc.

However, it is also possible to realize the cartridge information element and/or the sample information element with a coding scheme, which is human readable. Thus, the operator may easily recognize or check based on the used coding scheme without any technical support, whether the cartridge information element and the sample information element fit together. The most advantageous realization is to have both kinds of codings, the machine-readable coding and the human readable coding. Thus, the instrument can easily access the information of the cartridge information element and the sample information element and on the other hand, the operator may easily recognize a corresponding human readable cartridge information element and sample information element to prevent any mistake by the operator before inserting the cartridge together with a sample into the instrument to thereby further reduce the risk for mistakes and to prevent the loss of time and the loss of samples.

The object is further solved by a cartridge with a cartridge information element for accommodating a biological or chemical sample, wherein the sample could be any kind of fluid or other component, which could be analyzed by an instrument. The sample may further comprise a mixture of the sample taken from a test object, e.g. a human being, together with further consumables or reagents. Preferably, the cartridge has a slot or any other means for receiving at least a part of a sample taker, which was used for taking the sample. Thus, at least the part of the sample taker having the sample information element may be associated with the cartridge. In its simplest form, the whole sample taker represents the sample information element. Thus, the operator and also the instrument could easily recognize that the sample is a kind of tissue if a forceps is used as sample taker. Based on information of the cartridge information element and of the sample information element, the instrument is then able to process the sample in a cartridge based on the combined information.

Preferably, the information of the sample information element is provided to the cartridge. This could be on the one hand the insertion of the entire sample taker or at least a part of the sample taker to the cartridge or, in a very abstract way, receiving a part of the sample taker during inserting the sample in the cartridge and transmitting the information of the sample information element from the part of the sample taker to the cartridge for being stored in a storing device of the cartridge. After having transmitted the sample information, the part of the sample taker or the sample taker itself may be disposed. Thus, the information related to the sample of the sample information element is combined with information of the cartridge information element on the cartridge to provide both kinds of information together with inserting the cartridge to the instrument.

However, it is also possible to insert the sample taker or a part of it to the cartridge and to provide the cartridge and the inserted sample taker to the instrument. Here, the instrument may recognize information from the cartridge information element and the information from the sample information element to process the sample and/or the cartridge correctly.

The cartridge further includes at least one chamber for receiving the sample. Preferably, the chamber for accommodating or receiving the sample is closable during processing the cartridge. A further possibility is to close the chamber by the part of the sample taker comprising the sample information element. It is also possible to close the chamber by inserting the entire sample taker, which includes a kind of lid or insert, which closes the chamber of the cartridge. In this way, the sample taker is connectable with the cartridge for further transporting and processing the cartridge to and in the instrument. However, the slot for inserting or attaching the sample taker or a part of it to the cartridge may be an additional slot or clamp. Here the chamber for accommodating the sample may be a closed by its own lid.

In a further embodiment, it is possible to have a cartridge including at least two slots for inserting a sample taker. Each slot is adapted to receive a predetermined kind of sample taker, wherein the information of the sample is derived based on the position of the occupied slot. Thus, in case that the sample is blood, the sample taker is a kind of pipette. By providing a slot suited for accommodating a pipette tip, the sample taker or the pipette tip used for taking the sample is inserted in the slot suited for accommodating the pipette. By this, the instrument may recognize after inserting the cartridge in the instrument, which slot is occupied. In case that the pipette slot is occupied, the instrument could easily recognize that the inserted sample is blood.

It is also possible to have a predetermined shape of the lid of the sample taker. Thus, a pipette having a round lid is inserted in the round slot, wherein a different sample taker, e.g. forceps used for tissues has a rectangular lid. Thus, it could only be inserted into the rectangular slot. Then, the instrument could easily recognize based on the position of the sample taker, which sample is inserted in the cartridge. Moreover, the user or operator could easily recognize the kind of sample based on the slot in which the sample taker is inserted. In case that a sample taker is used, which does not fit in one of the slots, it is obviously not possible to process a sample with that kind of cartridge. In this example, the cartridge information element is the multitude of different slots, wherein the sample information element is the certain kind of sample taker suited for the slots.

As already indicated above, the sample taker could be recognized based on its form. However, it is also possible to have a sample taker including a sample information element, which is realized as an RF-ID, as a non-volatile memory or as a bar code, which allows a scanner or reading unit of the instrument to derive the information stored in a respective storing device or bar code. Here, the sample information is stored in the sample information element electronically. Alternatively or additionally, the sample information could be realized by a coding scheme including at least one of a color, a mechanical or geometrical shape, a form or a symbol or a combination thereof for uniquely identifying the sample type and/or the test type. It is also possible to have the electronically storing of sample and/or cartridge information and the human readable coding in form of the indicated different coding schemes. By using a non-electronic coding scheme, the operator could easily check whether the cartridge and the sample taker is an allowed combination. However, it is also possible to equip the instrument with a color-reading or shape reading unit for recognizing a coding scheme mentioned above, e.g. a geometrical shape of a cartridge information element or a certain color of the cartridge information element. Preferably, the coding scheme of the cartridge information element corresponds to the coding scheme of the sample information element or is the same, so that a handling by the user is simplified by an associative employment.

Thus, based on the information of the cartridge information element and the sample information element, independently on the kind of storing or coding scheme, the instrument may determine whether it is an allowed combination and may easily determine which different processing steps need to be performed with the cartridge including the sample.

The object is further solved by an instrument for handling such a cartridge. The instrument comprises at least an accommodation space, in which the cartridge is inserted or which is at least provided for accessing the sample in the cartridge by the instrument. The cartridge comprises the cartridge information element. Thus, the instrument may read the information of the cartridge information element. Moreover, the instrument may read in one alternative embodiment the information related to the sample from the sample information element being at least a part of the sample taker, which was used for taking the sample. The part of the sample taker including the sample information element is inserted in or attached to the cartridge. In an alternative embodiment, the instrument may read the information related to the sample from the sample information element, which is provided separately to the instrument by inserting the sample taker or at least a part of the sample taker in the instrument.

Moreover, the instrument includes a processing unit, which is adapted to handle or process the cartridge and/or the sample in dependence on information read and combined from the cartridge information element and from the sample information element.

The instrument may further include a writing unit for writing processing information on a storing device of the cartridge to provide further information, like parameters of the processing or analyzing of the sample. This information could be used by the operator after processing of the cartridge by the instrument.

A further aspect of the invention relates to a sample taker for taking a biological or chemical sample, which is to be inserted into a cartridge, wherein at least a part of the sample taker includes a sample information element.

The object is further solved by a method for processing a biological or chemical sample, comprising the steps of: providing a cartridge comprising the sample to the instrument, providing information relating to a test type to be performed by the instrument by means of a cartridge information element of the cartridge, providing sample-related information to the instrument together with the cartridge by a sample information element being at least a part of the sample taker or else to provide the sample-related information to the instrument separately to the cartridge with at least the part of the sample taker including the sample information element, recognizing the cartridge information related to the test type and information related to the sample type and processing the cartridge and/or the sample by the instrument according to information combined from the sample information element and from the cartridge information element.

### BRIEF DESCRIPTION OF THE DRAWINGS

In the following, the invention will be described using exemplary embodiments illustrated in the following drawings, in which:
Fig. 1 shows the cartridge and a sample taker according to the present invention.
Fig. 2 shows examples of sample information elements and cartridge information elements.
Fig. 3 shows different kinds of sample takers.
Fig. 4a-c represents the inserting of the sample taker and the cartridge.
Fig. 5 illustrates one embodiment of the invention.
Fig. 6 illustrates schematically a second embodiment of the present invention.
Fig. 7 is a flow chart describing the process according to the first embodiment.
Fig. 8 is a flow chart describing the process according to the second embodiment of the invention.
Fig. 9 schematically illustrates a further embodiment of the invention.

### DETAILED DESCRIPTION OF THE EMBODIMENT

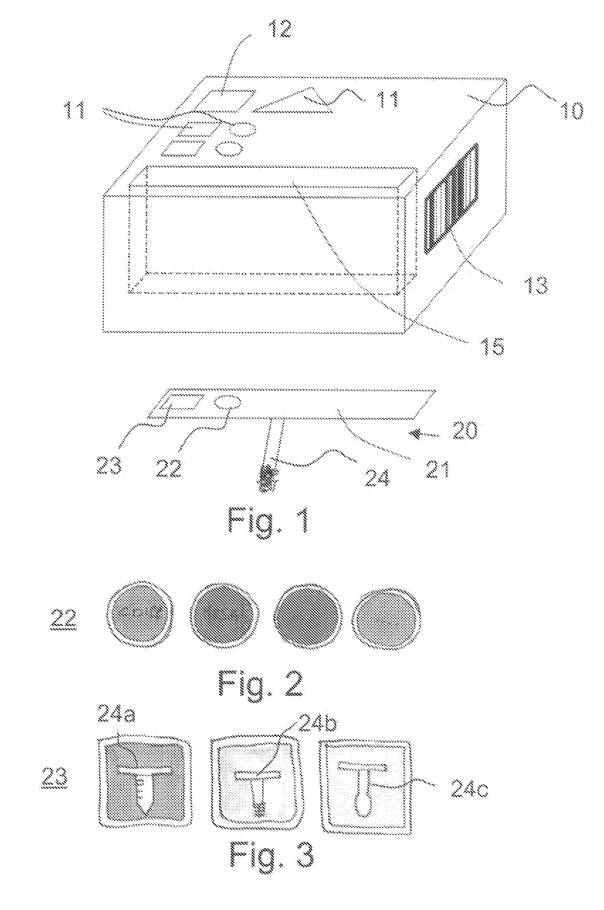

The cartridge 10 according to the present invention as shown in fig. 1 includes a chamber 15 for inserting a sample taker 20 or a part of the sample taker. It is not shown in fig. 1, but the cartridge may have further chambers for accommodating consumables and further components. The cartridge 10 includes cartridge information elements 11, 12 and 13. The cartridge information elements 11 are geometrical shapes, maybe in different colors or other tangible or mechanical features for indicating different kinds of information in respect of the cartridge. Moreover, the cartridge may additionally or alternatively include an electronic storing device 12 for electronically storing information related to the cartridge or a bar code 13. The information stored in the cartridge information element and in particular in the storing device 12 of the cartridge may at least identify the test type, which could be performed with the cartridge 10. Moreover, this information may include historical data or process related data for the cartridge, which is necessary for the instrument for processing the cartridge. Further, it may include parameters, like maximum temperature or maximum number of usage of the cartridge.

The cartridge 10 may have any suitable form for accommodating the sample and for transporting the sample for instance from the hospital to the laboratory. The chamber 15 may have an opening, which is adapted to the form of the sample taker 20. As illustrated in fig. 1, the sample taker 20 has a lid 21 having, e.g., a rectangular form. The lid 21 is connected to the tip 24 of the sample taker, which may be disposable. Moreover, the sample taker 20 may include an electronic storing device 23 or a bar code 26, which are machine-readable. Alternatively or additionally, the sample taker 20 may further include a sample information element in form of a geometrical shape having a certain color or symbol, as illustrated by the circle 22.

Fig. 2 illustrates different sample information elements 22 having a geometrical shape of a circle and having additionally a certain color. This color may be also illustrated or provided on the cartridge. Thus, the user may easily recognize whether a sample taker 20 having a green round sample information element 22 could be combined with a cartridge having also a green round circle as a cartridge information element 11.

In Fig. 3, there are three different kinds of sample takers. 24a illustrates a scoop, 24b illustrates a pipette and 24c illustrates a swoop. These different sample takers could be inserted into the chamber 15. The sample taker 20 as illustrated in fig. 1 comprises then a tip 24 corresponding to a certain kind of sample taker 24a-24c as illustrated in fig. 3.

The sample information element, which is required for providing the sample information to the instrument for correctly processing the sample included in the cartridge, may be realized in its simplest form as the entire sample taker. Thus, the complete sample taker 20 provides the necessary information to the instrument. The sample information could be on the one hand stored electronically in the electronic storing device 23 (RF-ID or a non-volatile memory) or in form of a bar code 26. However, it could also be just the outer shape of the sample taker 20 including the tip 24 used for taking the sample. Thus, by using the sample taker 20, e.g. forceps, the operator may easily recognize, that this is the sample taker for a tissue or any other suited sample type. However, a forceps is not suited for blood. Thus, the information of the sample, and in particular of the sample type, is transported by the sample taker to the cartridge and together with the cartridge to the instrument or in parallel with the cartridge to the instrument. Thus, the instrument may access to the information of the sample taker by just recognizing the geometrical form or the kind of the sample taker or by just reading the information stored on the electronic storing device 23 or the barcode 26 on the sample taker 20. The same applies for the cartridge information elements 11, 12 and 13.

Moreover, to further increase an easy processing for the operator and for the instrument, the lid 21 of the sample taker 20 may have a predetermined form and/or color. Thus, in case that the cartridge 10 has a red case or a red cartridge information element 11 and the sample taker 20 also includes a red coded symbol 22 or just a red lid 21, the operator recognizes by the interrelated coding scheme of the sample information element and of the cartridge information element, that this is an allowed combination. However, also the instrument 50 may recognize the colors by a color-reading unit and may determine whether it is an allowed combination or not. Alternatively or additionally, the instrument 50 may derive cartridge information from the electronic storing device 12 of the cartridge 10 and from the electronic storing device 23 of the sample taker 20 to get information how to process the sample and/or the cartridge 10.

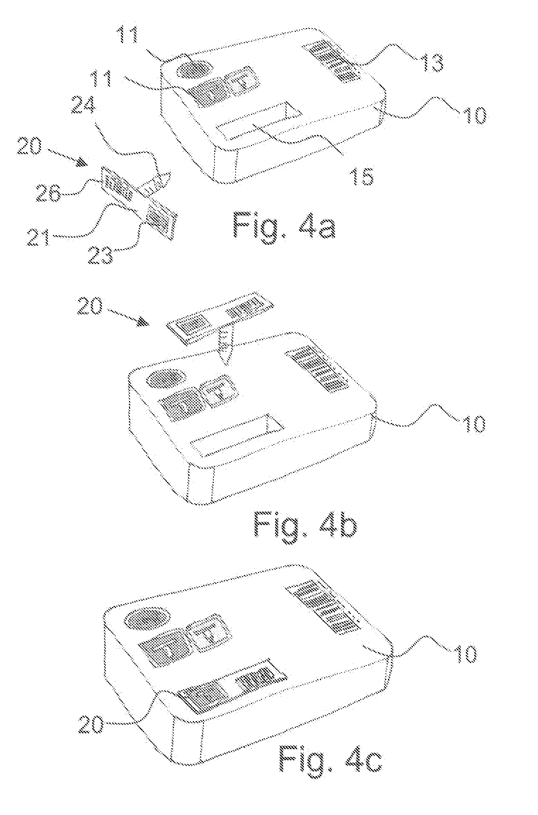

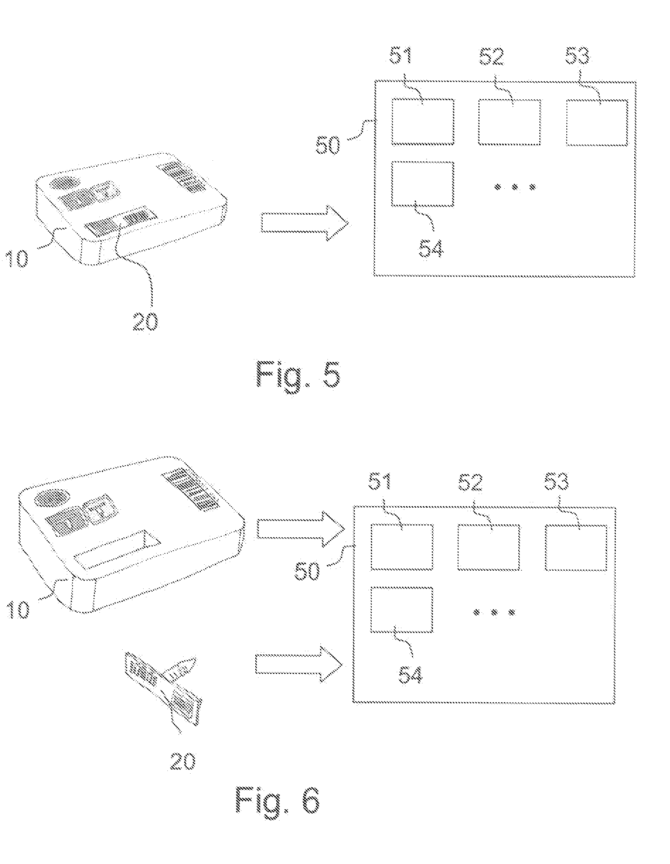

Thus, the cartridge information element on the cartridge 10 comprises at least information that identifies the test type for which a kind of cartridge 10 can be used, for instance MRSA or c. difficile testing. The sample information element 21, 22, 23 or 24 on the sample taker 20, comprises at least information that identifies the sample type, for instance blood, urine, saliva, tissue and/or stool, etc. Combining information from the cartridge information element 11, 12, 13 and the sample information element 21, 22, 23 or 24 can be done on the cartridge 10 as shown in figs. 4a-4c and in fig. 5.

In an alternative embodiment shown in fig. 6 it is possible to insert the sample taker 20 or a part of the sample taker 20, for instance only the lid 21, directly into the instrument 50 and separately from the cartridge 10 containing the sample, which was taken by the sample taker 20 before. This embodiment is especially suited for a situation where no possibility is given to attach the sample taker 20 or part of the sample taker 20 having the sample information element to the cartridge.

The instrument 50 for processing the cartridge and/or the sample is illustrated in figs. 5 or 6. It may preferably include an accommodation space for the cartridge, which is not shown. However, it may be possible to just place the cartridge in front or on top of the instrument 50. Here, the instrument 50 may handle the cartridge and/or the sample outside, e.g. by sucking the sample out of the cartridge for analyzing. The instrument 50 may further include a reading/writing device 52 for reading information from electronic storing devices 12, 23 or bar codes 13 or 26. The writing device 52 may be further used for writing information of the processing to the storing devices 12, 23 of the cartridge 10 or of the sample taker 20.

As shown in figs. 5 and 6, there are two different possibilities for providing both kinds of information, the cartridge information and the sample information. In fig. 5, the cartridge information is provided together and simultaneously with the sample information, since the sample taker 20 or at least a part of the sample taker, for instance the lid 21, is combined with the cartridge before inserting cartridge 10 into the instrument. Thus, the instrument 50 may read both kinds of information and may process the sample and/or the cartridge in dependency on the respective information. The instrument 50 may further include a heating system 53 or an actuating system 54 for performing tests or processes for analyzing or handling the sample included in the cartridge 10.

In the second embodiment shown in fig. 6, the cartridge 10 and the sample taker 20 are provided to the instrument 50, separately. Thus, both kinds of information are accessible to the reading unit 51 enabling the instrument 50 to process the cartridge 10 and the sample, correspondingly.

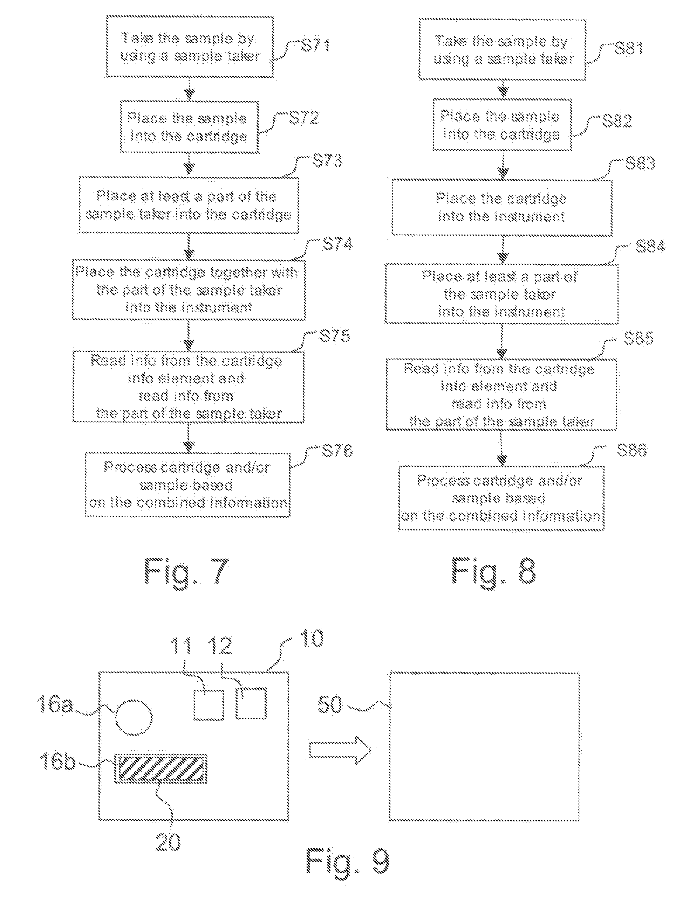

In fig. 7, the process for processing the sample in the first embodiment is illustrated. In step 571, the sample is taken by the operator (laboratory assistant, doctor) by use of a sample taker 20. In step S72, the sample is placed into the cartridge 10. Then, in step 573, the sample taker 20 or at least a part of the sample taker 20 having the sample information element 21, 22, 23 or 24, is placed into the cartridge 10. In case that the tip 24 of the sample taker 20 is unclean, it may be disposed before, wherein the remaining part (e.g. lid 21) of the sample taker 20 may be placed into the cartridge 10. Then, the cartridge 10 may be transported to the analyzing instrument 50, where the cartridge 10 is placed together with the part 21 of the sample taker 20 having the sample information element 21, 22, 23 or 24 into the instrument 50 (S74). Then, the instrument reads the information from the cartridge information element 11, 12, 13 and the sample information form the part 21 of the sample taker 20 (S75). By this, the instrument 50 is able to process the cartridge 10 and/or the sample based on the combined information derived from both information carriers 11, 12, 13 and 20, 21, 22, 23 or 24 (S76).

In an alternative embodiment shown in fig. 8, steps S81 and S82 are the same as S71 and S72 in fig. 7. However, steps S83 and S84 are different to S73 and S74 of the first embodiment. In S83, the cartridge 10 is placed into the instrument 50 without the sample taker 20. The sample taker 20 is placed separately into the instrument 50 in step S84. Here, the instrument 50 may have an additional accommodation space for the part 21 of the sample taker 20 having the required sample information element 21, 22, 23 or 24. Here, the steps S83 and S84 could be exchanged or performed in parallel. The steps S85 and S86 are the same as S75 and S76 in the first embodiment. Thus, the instrument has both kinds of information from the cartridge information element and from the sample information element to correctly process the sample and/or the cartridge using the combined information.

In fig. 9 a further embodiment of the present invention is shown. The cartridge 10 includes two different slots 16a and 16b. 16a has a round form, which is suited for first kind of sample taker. The second slot 16b has a rectangular form for accommodating a second kind of sample taker. As illustrated in fig. 9, the second slot 16b is occupied by a sample taker 20. Thus, the instrument 50 may easily recognize the position of the occupied second slot 16b to thereby derive the information, that a second kind of sample taker is used, and further to combine this information with the information derived from the cartridge information elements 11, 12 or 13 (not illustrated) to get the required information to process the cartridge 10 and the sample correctly.

As already indicated, the information elements can be machine-readable. Here, the combined information from the cartridge information element and the sample information element makes clear how the instrument should process the cartridge.

Alternatively or additionally, the cartridge 10 and sample information elements can be human-readable, wherein the combined information helps the operator to find the correct cartridge 10 with the correct sample taker 20. Consequently, this approach prevents an operator of using wrong combinations of cartridge 10 and sample taker 20. The information elements can be both, machine-readable and human-readable. Here, both advantages mentioned in the previous paragraphs are obtained.

Moreover, in case that the sample information element is an RF-ID tag 23, it is possible to transmit at least a part of the sample information either to the cartridge 10 or to the instrument 50 during inserting the sample into the cartridge 10 or into the instrument 50, wherein in both cases the sample taker 20 does not need to be permanently inserted in the cartridge 10 or in the instrument 50, since the sample information is transmitted wirelessly or via contacts to the respective receiving device (cartridge or instrument).

The main advantage of the present invention is that the information from the cartridge 10 and from the sample taker 20 is combined in one location or in the other (cartridge or instrument). But, in any case, the instrument 50 is able to easily determine how to process the cartridge 10 and/or the sample based on the combined information. By this, it is possible to process an MRSA cartridge differently from a cartridge for c.difficile testing, which comprises a different test. Moreover, it is also possible to process an MRSA cartridge receiving a sample by a syringe differently than an MRSA cartridge receiving a sample by a pipette.

## Claims

1. System for processing a biological or chemical sample, comprising:
- a cartridge (10) for accommodating a sample, the cartridge (10) comprising a cartridge information element (11, 12, 13);
- an instrument (50) for receiving and processing the cartridge (10) including the sample,
- a sample taker (20) for taking the sample to be entered into the cartridge (10), the sample taker (20) comprises a sample information element (20, 21, 22, 23, 24), wherein information carried on the cartridge information element (11, 12, 13) and information carried on the sample information element (20, 21, 22, 23, 24) are combined enabling the instrument (50) to process the sample.

2. System as claimed in claim 1, wherein at least a part of the sample taker (20) represents the sample information element (21, 22, 23, 24).

3. System according to claim 1 or 2, wherein the cartridge information element (11, 12, 13) identifies at least a test type and/or the sample information element (20, 21, 22, 23, 24) identifies at least a sample type.

4. System according to claims 1-3, wherein the information of the sample information element (20, 21, 22, 23, 24) and the information of the cartridge information element (11, 12,13) is combined on the cartridge (10).

5. System according to one of the claims 1-3, wherein the information of the sample information element (20, 21, 22, 23, 24) and the information of the cartridge information element (11, 12, 13) are provided to the instrument (50) to be combined on the instrument (50).

6. System according to claims 1-5, wherein the sample taker (20) including the sample information element (20, 21, 22, 23, 24) is provided to the instrument (50) together with the cartridge.

7. Cartridge for accommodating a biological or chemical sample to be handled by an instrument (50), wherein the cartridge (10) comprises a cartridge information element (11, 12, 13), wherein the cartridge (10) is configured to receive at least a part of a sample taker (20) for taking the sample to be entered into the cartridge (10), wherein the part of the sample taker (20) comprises a sample information element (20, 21, 22, 23, 24), wherein the information of the cartridge information element (11, 12, 13) and the information of the sample information element (20, 21, 22, 23, 24) provide information enabling the instrument (50) to process the sample in the cartridge (10) based on the combined information.

8. Cartridge of claim 7, wherein when inputting the sample into the cartridge (10) by means of the sample taker (20), the information of the sample information element (20, 21, 22, 23, 24) is provided to the cartridge (10) for being associated with or stored in the cartridge (10).

9. Cartridge as claimed in claim 7 or 8, further including a storing means (12) for storing the sample related information received from the part of the sample taker comprising the sample information element.

10. Cartridge as claimed in one of the claims 7-9, wherein at least the part of the sample taker (20) comprising the sample information element (20, 21, 22, 23, 24) is combinable with the cartridge for being provided together with the cartridge (10) to the instrument (50).

11. Cartridge as claimed in one of the claims 7-10, wherein the cartridge (10) having at least two slots (16a, 16b), wherein each slot is adapted to receive a part of a predetermined sample taker (20), wherein the sample related information is derived based on the position of the slot occupied by the part (21) of the sample taker (20).

12. Cartridge as claimed in one of the claims 7-11, wherein the sample information element (20, 21, 22, 23, 24) and/or the cartridge information element (11, 12, 13) comprise a coding scheme including at least one of a color, mechanical, geometrical shape, symbol or tactile feature or a combination thereof for uniquely identifying the sample type and/or the test type.

13. Instrument for handling a cartridge (10), comprising:
- at least an accommodation space adapted to receive the cartridge (10) comprising a cartridge information element (11, 12, 13);
- reading unit (51) adapted to read information related to a test type from the cartridge information element (11, 12, 13) and to read information related to a sample type from a sample information element (20, 21, 22, 23, 24) being at least a part of a sample taker (20);
- processing unit (52) adapted to handle the cartridge (10) and/or a sample included in the cartridge (10) in dependence on information combined from the information read from the cartridge information element (11, 12, 13) and information of the sample information element (20, 21, 22, 23, 24).

14. Sample taker for taking a biological or chemical sample to be entered into a cartridge (10), wherein at least a part of the sample taker (20) includes a sample information element (20, 21, 22, 23, 24), wherein the sample information element is adapted to provide information related to the sample type to the cartridge (10) and/or to an instrument (50).

15. Method for processing a biological or chemical sample to be processed by an instrument, comprising the steps of:
- providing (S73, S83) a cartridge (10) comprising the sample to the instrument (50);
- providing information relating to a test type to be performed by the instrument (50) by a cartridge information element (11, 12, 13) provided with the cartridge (10),
- providing (S74) sample related information to the instrument (50) together with the providing (S73, S83) the cartridge (10) by a sample information element (20, 21, 22, 23, 24) being at least part of a sample taker (20) or providing (S84) sample related information to the instrument (50) separately to the cartridge (10) with at least a part of the sample taker (20) including the sample information element (20, 21, 22, 23, 24),
- recognizing (S75, S85) the cartridge information relating to a test type and the information relating to the sample type;
- processing (S76, S86) the cartridge (10) and/or the sample by the instrument (50) according to information combined from information relating to the test type and from information relating to the sample type.
